# EUROPEAN PATENT APPLICATION

(11) **EP 1 703 253 A1**
(43) Date of publication of application: **20.09.2006**
(21) Application number: 05710559.5
(22) Date of filing: 23.02.2005
(51) Int. Cl.: G01C 19/56, G01P 9/04, H01L 41/08, H01L 41/22

(54) **ANGULAR VELOCITY SENSOR AND MANUFACTURING METHOD THEREOF**

(30) Priority: 05.03.2004 JP 2004061965
(71) Applicant: Matsushita Electric Industries Co., Ltd., Kadoma-shi, Osaka 571-8501 (JP)
(72) Inventor: YASUMI, M. Matsushita Electric Industrial Co., Ltd, Osaka-shi Osaka 540-6319 (JP); KOMAKI, K. Matsushita Electric Industrial Co., Ltd, Osaka-shi, Osaka 540-6319 (JP); MURASHIMA,Y. Matsushita Electric Industrial Co,Ltd, Osaka-shi Osaka 540-6319 (JP); NAKAMURA,Y. Matsushita Electric Industrial Co.,Ltd, Osaka-shi Osaka 540-6319 (JP); KAWASAKI, T. Matsushita Electric Industrial Co,Ltd, Osaka-shi Osaka 540-6319 (JP)
(74) Representative: Grünecker, Kinkeldey, Stockmair & Schwanhäusser Anwaltssozietät
(86) International application number: PCT/JP2005/002866
(87) International publication number: WO 2005/085757

(57) **Abstract**

A substrate is made of single crystal silicon and having a tuning folk shape. The substrate includes plural arms extending in parallel with each other and a joint section for connecting respecting ends of the arms with each other. An angular velocity sensor includes a barrier layer containing silicon oxide provided on each of the arms of the substrate, a first adhesion layer containing titanium provided on the barrier layer a first electrode layer containing at least one of titanium and titanium oxide provided on the first adhesion layer, an orientation control layer provided on the first electrode layer, a piezoelectric layer provided on the orientation control layer, a second adhesion layer provided on the piezoelectric layer, and a second electrode layer provided on the second adhesion layer. This angular velocity sensor has a small size and stable characteristics.

## Description

### TECHNICAL FIELD

The present invention relates to an angular velocity sensor having a thin-film deposited structure, and to a method of manufacturing the sensor.

### BACKGROUND ART

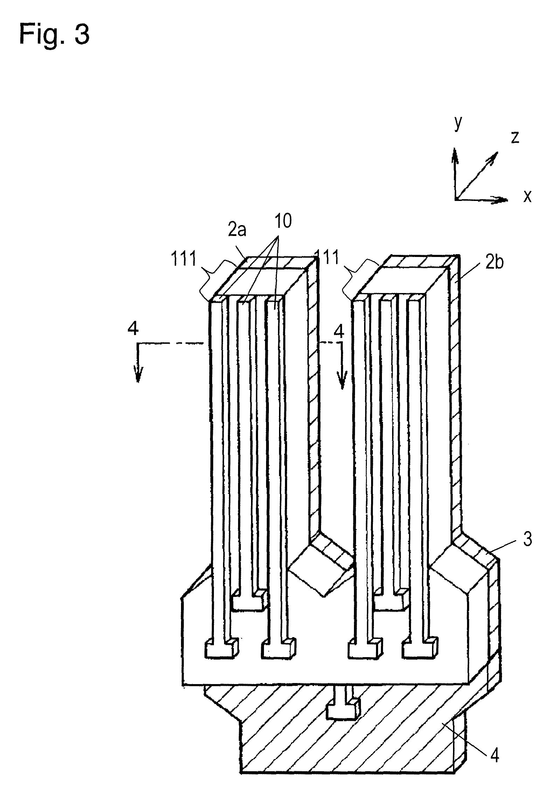

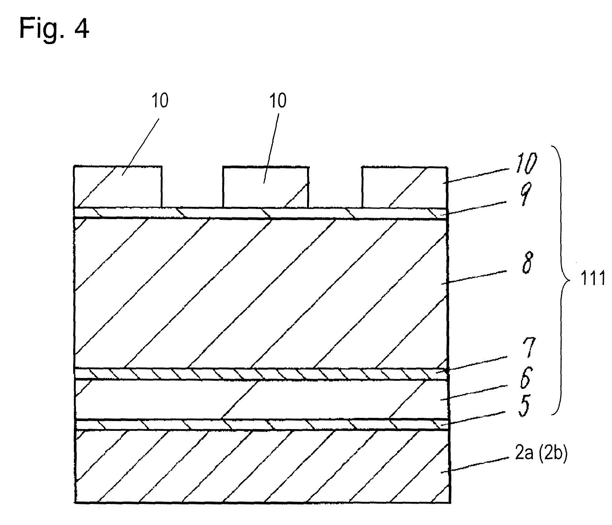

Fig. 3 is a perspective view of conventional angular velocity sensor 101 disclosed in Japanese Patent No.3481235. Fig. 4 is a sectional view of angular velocity sensor 101 at line 4-4 shown in Fig. 3. Substrate 4 has a tuning-fork shape having a pair of arms 2a and 2b extending in parallel with each other in the y-direction shown in Fig. 3, and having joint 3 connecting arm 2a with arm 2b. As shown in Fig. 4, angular velocity sensor 101 includes adhesion layer 5 provided on arm 2a (2b) of substrate 4, lower electrode layer 6 provided on adhesion layer 5, orientation-control layer 7 provided on lower electrode layer 6, piezoelectric layer 8 provided on orientation-control layer 7, adhesion layer 9 provided on piezoelectric layer 8, and upper electrode layer 10 provided on adhesion layer 9. Adhesion layer 5, lower electrode layer 6, orientation-control layer 7, piezoelectric layer 8, adhesion layer 9, and upper electrode layer 10 provide deposited body 111. Alternating-current voltages having phases reverse to each other are applied to respective upper electrode layers 10 of arms 2a and 2b cause arms 2a and 2b to vibrate in the x-direction in which the arms are arranged.

Substrate 4 is made of single-crystal silicon (Si). Adhesion layer 5 contains titanium. Lower electrode layer 6 contains platinum (Pt) and includes Ti or TiOx. Orientation-control layer 7 contains lanthanum-magnesium-added lead titanate (PLMT). Piezoelectric layer 8 is made of lead zirconate titanate (Pb(Zr,Ti)O₃: PZT).

In combination of substrate 4 of Si and adhesion layer 5 of Ti, Si reacts with Ti at a high temperature when deposited body 111 is formed. This reaction causes Si atoms to spread in Pt of lower electrode layer 6, orientation-control layer 7, and PZT of piezoelectric layer 8, thereby altering these layers. If the Si-atoms spread in Pt of lower electrode layer 6, orientation-control layer 7 and PZT of piezoelectric layer 8 or the PZT-crystal of piezoelectric layer 8 cannot be oriented to have priority orientation (001), accordingly deteriorating characteristics of piezoelectric layer 8. This prevents angular velocity sensor 101 from having a small size and may make its characteristics unstable.

### SUMMARY OF THE INVENTION

A substrate is made of single crystal silicon and having a tuning folk shape. The substrate includes plural arms extending in parallel with each other and a joint section for connecting respecting ends of the arms with each other. An angular velocity sensor includes a barrier layer containing silicon oxide provided on each of the arms of the substrate, a first adhesion layer containing titanium provided on the barrier layer a first electrode layer containing at least one of titanium and titanium oxide provided on the first adhesion layer, an orientation control layer provided on the first electrode layer, a piezoelectric layer provided on the orientation control layer, a second adhesion layer provided on the piezoelectric layer, and a second electrode layer provided on the second adhesion layer.

This angular velocity sensor has a small size and stable characteristics.

### BRIEF DESCRIPTION OF THE DRAWINGS

Fig. 1 is a perspective view of an angular velocity sensor in accordance with an exemplary embodiment of the present invention.
Fig. 2 is a sectional view of the angular velocity sensor at line 2-2 shown in Fig. 1.
Fig. 3 is a perspective view of a conventional angular velocity sensor.
Fig. 4 is a sectional view of the angular velocity sensor at line 4-4 shown in Fig. 3.

### REFERENCE NUMERALS

- 1: Angular Velocity Sensor
- 2a: Arm
- 2b: Arm
- 3: Joint
- 4: Substrate
- 5: Adhesion Layer (First Adhesion Layer)
- 6: Lower Electrode Layer (First Electrode Layer)
- 7: Orientation-Control Layer
- 8: Piezoelectric Layer
- 9: Adhesion Layer (Second Adhesion Layer)
- 10: Upper Electrode Layer (Second Electrode Layer)
- 11: Deposited Body
- 12: Barrier Layer

### DETAILED DESCRIPTION OF THE PREFERRED EMBODIMENTS

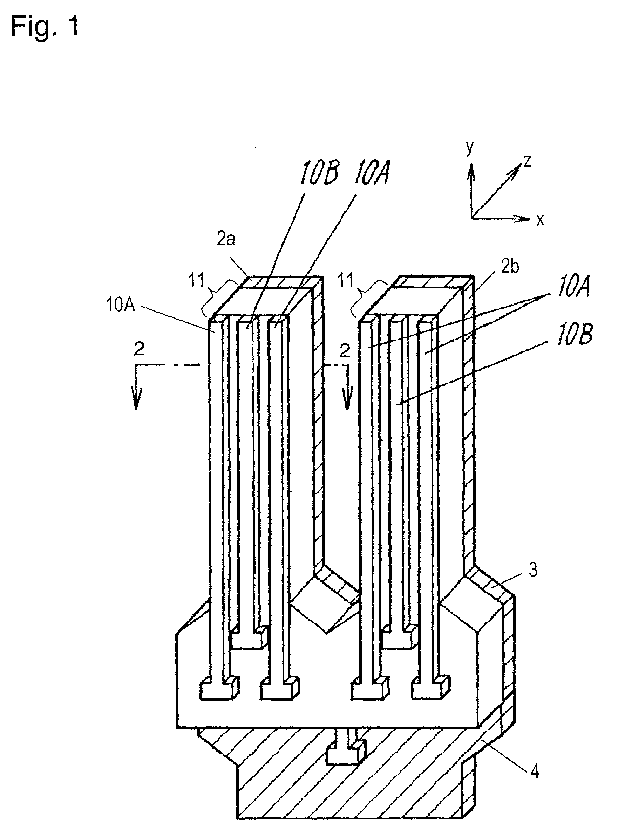

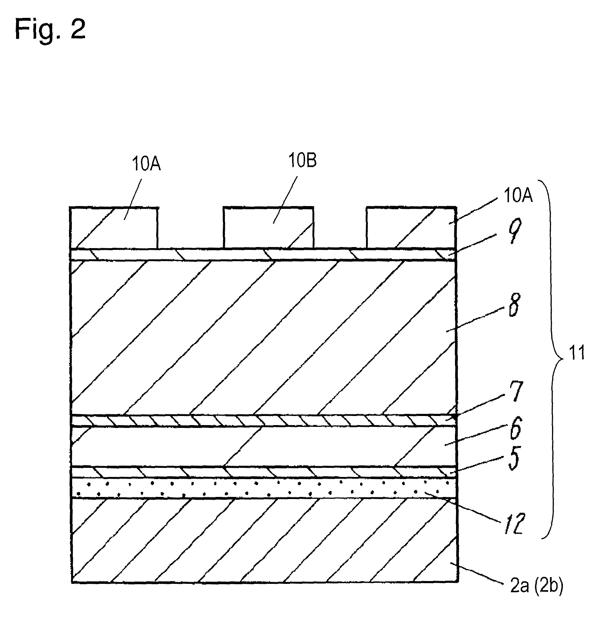

Fig. 1 is a perspective view of an angular velocity sensor in accordance with an exemplary embodiment of the present invention. Fig. 2 is a schematic view of a thin-film deposited structure of angular velocity sensor 1 of the embodiment. Substrate 4 has a tuning-fork shape having a pair of arms 2a and 2b extending in parallel with each other in the y-direction and having joint 3 connecting arm 2a with arm 2b. Angular velocity sensor 1 includes barrier layer 12 provided on arm 2a (2b) of substrate 4, adhesion layer 5 provided on barrier layer 12, lower electrode layer 6 provided on adhesion layer 5, orientation-control layer 7 provided on lower electrode layer 6, piezoelectric layer 8 provided on orientation control layer 7, adhesion layer 9 provided on piezoelectric layer 8, and upper electrode layer 10 provided on adhesion layer 9. Barrier layer 12, adhesion layer 5, lower electrode layer 6, orientation control layer 7, piezoelectric layer 8, adhesion layer 9, and upper electrode layer 10 provide deposited body 11. Alternating-current (AC) voltages having phases reverse to each other are applied to respective driving electrodes 10A of upper electrode layers 10 of arms 2a and 2b and causes arms 2a and 2b to vibrate in the x-direction in which the arms are arranged.

Substrate 4 is made of single-crystal silicon (Si). Barrier layer 12 is made of silicon dioxide (SiO₂), which is easily produced by thermally oxidizing substrate 4 at a temperature higher than 700°C in oxygen or water vapor. The thickness of barrier layer 12 ranges from 20nm to 300nm.

Adhesion layer 5 provided on barrier layer 12 is made of titanium (Ti). Lower electrode layer 6 is made of platinum (Pt) containing titanium oxide (TiOx). Pt has a high conductivity and exhibits an excellent stability under high-temperature oxidizing atmosphere. Adhesion layer 5 has a thickness not greater than 50nm. Lower electrode layer 6 has a thickness not greater than 500nm.

Orientation-control layer 7 is made of lanthanum-magnesium-added lead titanate (PLMT) which contains mainly lead titanate (PbTiO₃) and contains lanthanum (La) and magnesium (Mg). The thickness of orientation-control layer 7 is not greater than 200nm. Piezoelectric layer 8 made of lead zirconate titanate (Pb(Zr,Ti)O₃: PZT) has a perovskite structure. The thickness of layer 8 ranges from 1000nm to 4000nm. Orientation-control layer 7 reduces influence of the difference of respective lattice constants between Pt-crystal of lower electrode layer 6 and PZT-crystal of piezoelectric layer 8.

An AC voltage is applied between driving electrode 10A and lower electrode layer 6 to generate piezoelectric displacement in deposited body 11, thereby vibrating arms 2a and 2b in the x-direction. When an angular velocity is applied during the vibration, piezoelectric layer 8 is distorted by a Coriolis force. This distortion causes detecting electrode 10B to carry an electric charge allowing the degree of the distortion to be detected.

Piezoelectric layer 8, being made of PZT, increases the piezoelectric displacement generated in deposited body 11. Substrate 4, being made of Si, provides arms 2a and 2b of ideal elastic bodies having small vibration attenuation, i.e., a sharp resonance (a high Q-value) which vibrates in responsive to the piezoelectric displacement in piezoelectric layer 8. This structure provides angular velocity sensor 1 with a small size and stable characteristics, such as a high sensitivity.

Barrier layer 12 of silicon oxide (SiO₂) film provided between substrate 4 and adhesion layer 5 prevents Si-atoms from diffusing in Pt of lower electrode layer 6, orientation control layer 7, and PZT of piezoelectric layer 8, thereby preventing these layers from deterioration. Accordingly, piezoelectric layer 8 is oriented to have a priority orientation (001), thus increasing the rate of crystallized portions of piezoelectric layer 8 to increase degree of crystallinity, accordingly enhancing crystalline state with uniformly-aligned orientation. As a result, the piezoelectric constant of piezoelectric layer 8 increases, and a variation of the piezoelectric constant with respect to the voltage applied to piezoelectric layer 8. Then, piezoelectric layer 8 has a high performance even having a small size, thus providing angular velocity sensor 1 having a small size and stable characteristics.

In angular velocity sensor 1 according to the embodiment, the layers of deposited body 11 are bonded tightly with each other. In substrate 4 containing Si, barrier layer 12 containing SiO2, and adhesion layer 5 containing Ti, SiO₂ and Ti provide a strong bonding at the interface between them because Ti has large affinity for oxygen. Deposited body 11 provided on substrate 4 of angular velocity sensor 1 accordingly is adhered strongly to substrate 4. Adhesion layer 5 (made of Ti) and lower electrode layer 6 (made of alloy of Ti and Pt, or alloy of TiOx and Pt) are bonded with each other by metallic bonding. The layers from substrate 4 to lower electrode layer 6 are accordingly prevented from being removed at the interfaces between the layers, thus increasing a yield rate and a reliability of angular velocity sensor 1. Adhesion layer 9 provided between piezoelectric layer 8 and upper electrode layer 10 is bonded strongly to piezoelectric layer 8 and upper electrode layer 10.

Adhesion layer 9 is made of conductive metallic oxide-based material or metal, such as chrome or titanium identical to material of adhesion layer 5, having large affinity to oxygen. There materials is bonded strongly to upper electrode layer 10 and piezoelectric layer 8, and do not diffuse in piezoelectric layer 8 and upper electrode layer 10, thus not altering these layers. The thickness of adhesion layer 9 ranges from 5nm to 50nm. The material and the thickness of adhesion layer 9 are not limited to those mentioned above, as long as allowing adhesion layer 9 to be bonded with upper electrode layer 10 and piezoelectric layer 8 and not diffusing in these layers not to altering these layers.

Angular velocity sensor 1 according to the embodiment has uniform orientation of PZT-crystal of piezoelectric layer 8, thereby exhibiting a large piezoelectric displacement. A tetragonal crystal of PZT has a polarization axis in a direction of orientation (001). When the PZT-layer is driven as a polarized thin-piezoelectric structure, the piezoelectric characteristics become maximum when the direction of a electric field driving the layer is parallel with the direction of the polarization. That is, it is important that the direction of the driving electric field is identical to a crystal direction, i.e., the direction of orientation (001). In order to apply the driving electric field in the direction of orientation (001), piezoelectric layer 8 is oriented to have a priority orientation such that the crystal orientation (001) of PZT becomes parallel with an axis perpendicular to substrate 4. That is, piezoelectric layer 8 necessarily has a PZT-layer having the (001) surface at a surface of layer 8.

Lower electrode layer 6 is made of Pt containing Ti or TiOx. Lower electrode layer 6 and orientation control layer 7 between lower electrode layer 6 and piezoelectric layer 8 allow piezoelectric layer 8 to have the surface having the (001) crystal surface. Lower electrode layer 6 may be formed by sputtering having a high-temperature process. When this sputtering is performed only with argon gas, Ti at the surface of lower electrode layer 6 is not oxidized. When the sputtering id performed with mixture gas of argon and oxygen, Ti is oxidized to become TiOx. During the high-temperature process, Pt diffuses in the grain boundary of Ti, while Ti diffuses in the grain boundary of Pt (mutual diffusion). Further, Ti (TiOx) diffuses outside along the grain boundary of Pt (external diffusion). The external diffusion facilitates the forming of a PZT thin film having a perovskite structure, and the surface of piezoelectric layer 8, the PZT thin film, is oriented to have a priority orientation (001).

Orientation-control layer 7 provided between lower electrode layer 6 and piezoelectric layer 8 will be described below. During crystal growth of each layer when a thin film is formed on substrate 4, a layer has preferably a lattice constant identical to that of the thin film formed on the layer (lattice matching). The lattice constant represents the distance between atoms forming a single-crystal structure. The lattice constant is the value particular to a substance, that is, the lattice constant of a Pt-crystal is different from that of a PZT-crystal, for example, the lattice constant of PT is 0.392nm, and that of PZT is 0.401nm. In order to prevent lattice mismatch between the Pt-crystal of lower electrode layer 6 and the PZT-crystal of piezoelectric layer 8, orientation control layer 7 containing PLMT is provided between lower electrode layer 6 and piezoelectric layer 8.

In a region close to the surface of adhesion layer 5, Ti or TiOx appears at positions distanced from each other and each having an island shape. Orientation control layer 7 crystal-grows on and above the island-shaped Ti (TiOx) as a core. Therefore, even if adhesion layer 5 is oriented to have a (111) surface, orientation control layer 7 is easily oriented to have a (001) surface. In cubic crystals, a (100) surface is identical to a (001) surface. That is, orientation control layer 7 is easily oriented to have a (100) surface or a (001) surface on Ti or TiOx.

Ti or TiOx is contained in layer 5, thus not protruding substantially from the surface of adhesion layer 5. If Ti or TiOx protrudes, the size of the protruding is smaller than 2 nm. For this reason, orientation control layer 7 is easily oriented to have the (100) surface or the (001) surface.

Substrate 4, being made of Si, allows adhesion layer 5 to be usually oriented to have a (111) surface. A region of orientation control layer 7 above the surface area of adhesion layer 5 which does not contain Ti or TiOx does not become a (100) surface or a (001) surface, but has a (111) surface other than the (100) surface and the (001) surface, or an amorphous state. In orientation control layer 7, the above region above, i.e., the region which is not oriented, i.e., which does not have the (100) surface or the (001) surface, exists in the surface region only in a depth not larger than 20nm from the surface. That is, the region having the (100) surface or the (001) surface on Ti (TiOx) spreads as the crystal growth. Therefore, the area of the region oriented to have the (100) surface or the (001) surface at a cross section perpendicular to the thickness direction of the layer increases from adhesion layer 5 towards a direction opposite to layer 5, i.e., towards piezoelectric layer 8. Thus, the region having crystal orientation except for a (100) surface and a (001) surface decreases. In this way, when orientation-control layer 7 has a thickness of about 20nm, most of the region of orientation-control layer 7 oriented to have the (100) surface or the (001) surface.

Piezoelectric layer 8 is formed on orientation control layer 7 produced in above, and orientation-control layer 7 causes piezoelectric layer 8 to be oriented to have a (001) surface. Since a (100) surface is identical to a (001) surface in rhombohedral crystal, the crystal orientation of layer 8 includes orientation of a (100) surface. Orientation-control layer 7 allows piezoelectric layer 8 to be made of piezoelectric material having excellent piezoelectric characteristics, such as high sensitivity, while orientation-control layer 7 may be made of material having its crystal orientation direction aligned. This allows more than 80% of the region of piezoelectric layer 8 to be oriented to have the (001) surface.

The region which is not oriented to have the (100) surface or the (001) surface of orientation control layer 7may exist not only in the surface area on the side of adhesion layer 5, but also in the surface area on the side of piezoelectric layer 8. Even in this case, as long as orientation control layer 7 has a thickness not smaller than 0.01µm, most of the surface area of layer 7 on the side of piezoelectric layer 8 is oriented to have the (100) surface or the (001) surface. This allows more than 90% of the region of piezoelectric layer 8 to be oriented to have (001) surface.

According to this embodiment, orientation-control layer 7 is provided for causing crystal to be oriented to have the (001) surface. Therefore, orientation-control layer 7 may be made of oxide dielectric material containing at least Pb and Ti, such as lead zirconate titanate (PLT) having lanthanum (La) added thereto that contains a stoichiometrically-excessive amount of Pb. In order to align the orientation of piezoelectric layer 8, the material (PLT) of orientation control layer 7 contains more than zero and not greater than 25mol% of La. The amount of Pb in the PLT of orientation-control layer 7 exceeds stroichiometrically, and is more than zero and not greater than 30 mol%. Orientation-control layer 7 is made of the PLMT according to this embodiment, but may be made of lead zirconate titanate (PLT) containing lanthanum and zirconium, PLZT, or a PLT-based or PLZT-based material including at least one of magnesium and manganese. The concentration of zirconium of PLZT of orientation control layer 7 would be less than 20 mol%. If orientation-control layer 7 is made of the PLT-based or PLZT-based material including at least one of magnesium and manganese, a total amount of magnesium and manganese is more than zero and not larger than 10 mol%.

Thus, lower electrode layer 6 is made of Ti or TiOx containing Pt, and orientation-control layer 7 between lower electrode layer 6 and piezoelectric layer 8 allows piezoelectric layer 8 (PZT film) to be oriented uniformly to have a crystal orientation (001). This aligns the orientation of piezoelectric layer 8 and provides a large piezoelectric displacement.

Piezoelectric layer 8 of PZT has a surface oriented to have (001) surface and has its orientation aligned, providing a sensitivity even if having a small area. This allows angular velocity sensor 1 to have a small size and stable characteristics, such as sensitivity. Further, the layers from substrate 4 and adhesion layer 5 are prevented from being peeled off at the interfaces between them, the bonding particularly between substrate 4 and adhesion layer 5 increases, accordingly providing angular velocity sensor 1 with high reliability.

An electronic device, such as an inkjet head, including a piezoelectric device other than an angular velocity sensor may includes a vibration layer made of SiO₂ on a substrate of Si (a pressure chamber substrate in the inkjet head). The vibration layer is completely different from barrier layer 12 of SiO₂ according to the embodiment in their applications and effects. The vibration layer of the inkjet head vibrates for discharging pushing ink accommodated in a pressure chamber to outside the pressure chamber. The vibration layer has a thickness ranges from 0.5 to 10µm. Barrier layer 12 of this embodiment is provided for increasing adhesion between the layers and for aligning the orientation of crystal of piezoelectric layer 8. Barrier layer 12 having a thickness similar to that of the vibration layer of the inkjet head would give bad influences to characteristics of angular velocity sensor 1. Since Si and SiO2 have Young's moduluses different from each other, barrier layer 12 of SiO₂ having an excessively-large thickness causes Young's modulus of arms 2a and 2b to be nonuniform, accordingly generating distortion in vibration of arms 2a and 2b.

A method of manufacturing angular velocity sensor 1 will be described below.

A surface of substrate 4 made of single-crystal silicon is oxidized, forming barrier layer 12. Then, adhesion layer 5 containing at least titanium on barrier layer 12 is formed by sputtering. Then, lower electrode layer 6 made of platinum including at least one of titanium and titanium oxide is formed on adhesion layer 5 by sputtering. Then, orientation control layer 7 is formed on lower electrode layer 6 by sputtering. Then, piezoelectric layer 8 is formed on orientation control layer 7 by sputtering. Then, adhesion layer 9 is formed on piezoelectric layer 8 by sputtering or vacuum deposition. Then, upper electrode layer 10 is formed on adhesion layer 9 by sputtering or vacuum deposition. Orientation control layer 7 is made of dielectric oxide material, such as PLMT, containing at least Pb and Ti. Piezoelectric layer 8 is made of PZT having a pevroskite structure.

This method provides deposited body 11 more easier than a chemical vapor deposition method. Barrier layer 12 of silicon oxide is formed preferably by thermally oxidizing a substrate of single-crystal silicon. Barrier layer 12 may be formed not only by the thermally oxidizing, nit also by sputtering, a thermal-CVD method, and a plasma-CVD method, and sol-gel process.

Deposited body 11 may be provided on substrate 4 having the tuning-fork shape. Deposited body 11 is provided on a single-crystal silicon wafer, and then the wafer is formed to have the a tuning-fork shape as to obtain substrate 4.

### INDUSTRIAL APPLICABILITY

An angular velocity sensor according to the present invention has a small area and with excellent piezoelectric characteristics, such as sensitivity.

## Claims

1. An angular velocity sensor comprising:
a substrate made of single crystal silicon and having a tuning folk shape, the substrate including
a plurality of arms extending in parallel with each other, and
a joint section for connecting respecting ends of the arms with each other;
a barrier layer provided on each of the plurality of arms of the substrate, the barrier layer containing silicon oxide;
a first adhesion layer provided on the barrier layer, the first adhesion layer containing titanium;
a first electrode layer provided on the first adhesion layer, the first electrode layer containing at least one of titanium and titanium oxide;
an orientation control layer provided on the first electrode layer;
a piezoelectric layer provided on the orientation control layer;
a second adhesion layer provided on the piezoelectric layer; and
a second electrode layer provided on the second adhesion layer.

2. The angular velocity sensor of claim 1, wherein the orientation control layer comprises dielectric oxide material containing Pb and Ti.

3. The angular velocity sensor of claim 1, wherein the orientation control layer comprises lead titanate containing at least one of La and Mg.

4. The angular velocity sensor of claim 1, wherein the piezoelectric layer comprises slead zirconate titanate.

5. A method of manufacturing an angular velocity sensor, comprising:
providing a substrate made of single crystal silicon and having a tuning folk shape, the substrate including a plurality of arms and a joint section for connecting respecting ends of the arms with each other, the plurality of arms extending in parallel with each other;
forming a barrier layer containing silicon oxide by oxidizing a surface of the plurality of the arms of the substrate;
forming a first adhesion layer containing titanium on the barrier layer by sputtering;
forming a first electrode layer containing platinum and at least one of titanium and titanium oxide on the first adhesion layer by sputtering;
forming an orientation control layer on the first electrode layer by sputtering;
forming a piezoelectric layer on the orientation control layer by sputtering;
forming a second adhesion layer on the piezoelectric layer by sputtering or vacuum deposition; and
forming a second electrode layer on the second adhesion layer by sputtering or vacuum deposition.

6. The method of claim 5, wherein said forming the barrier layer comprises thermally oxidizing a surface of the substrate.

7. The method of claim 5, wherein the orientation control layer comprises dielectric oxide material containing Pb and Ti.

8. The method of claim 5, wherein the orientation control layer comprises lead titanate containing at least one of La and Mg.

9. The method of claim 5, wherein the piezoelectric layer comprises lead zirconate titanate.
